# EUROPÄISCHE PATENTSCHRIFT

(11) **EP 0 489 194 B1**
(45) Veröffentlichungstag und Bekanntmachung des Hinweises auf die Patenterteilung: **13.09.1995**
(21) Anmeldenummer: 90123324.7
(22) Anmeldetag: 05.12.1990
(51) Int. Cl.: H04B 3/54, H04L 25/03

(54) **Schaltungsanordnung**
Circuit arrangement
Agencement de circuit

(43) Veröffentlichungstag der Anmeldung: 10.06.1992
(73) Patentinhaber: SIEMENS AKTIENGESELLSCHAFT, 80333 München (DE)
(72) Erfinder: Zierhut, Hermann, Dipl.-Ing., W-8402 Neutraubling (DE)

(56) Entgegenhaltungen:
- EP-A- 0 355 532
- EP-A- 0 365 696
- FR-A- 643 915
- US-A- 1 532 172

## Beschreibung

Die Erfindung bezieht sich auf eine Schaltungsanordnung zur Ankopplung eines ersten elektrischen Signals an ein zweites als Wechselsignal ausgebildetes Signal.

Bei Datenbussystemen ist es bekannt, auf einem Busleiter sowohl ein Datensignal als auch die Versorgungsspannung zu führen. Ein derartiges System ist aus der EP-A-0 365 696 bekannt. Dabei wird der Busleiter von einer Spannungsversorgung mit einer gegen Erde symmetrischen Gleichspannung versorgt. An dem Busleiter sind mehrere Teilnehmer angeschlossen, welche einerseits die Versorgungsspannung vom Busleiter abgreifen und andererseits ein Datensignal vom Busleiter empfangen und auf diesen senden. Das Datensignal ist dabei als Wechselsignal mit Rechteckimpuls ausgebildet. Durch die Teilnehmer am Bus wird dieses Signal in seinem Signalverlauf verändert. Unter Umständen kann es derart verändert werden, daß die Signalerkennung nicht mehr einwandfrei funktioniert.

Aus der EP-A-0 355 532 ist eine Schaltungsanordnung zur Ankopplung eines ersten elektrischen Signals an ein Datenbussystem bekannt, wobei das Datenbussystem zumindest ein zweites als Wechselsignal ausgebildetes elektrisches Signal führt. Die Ankopplung erfolgt induktiv (Oberbegriff Anspruch 1).

Das Problem der Veränderung des Signalverlaufs, insbesondere der Veränderung der Dachschräge des Rechteckimpulses im Sinne einer Verzerrung, tritt auch dort auf. Mittels der Elemente V2 und L3 wird lediglich senderseitig eine amplitudenmäßige Anpassung in der Signalhöhe erzielt. Das Problem der Signalverzerrung wird dort weder angesprochen noch gelöst.

Der Erfindung liegt die Aufgabe zugrunde, die obengenannten Nachteile zu beseitigen und somit den Datenverkehr auf dem Bus zu verbessern.

Ausgehend von der Tatsache, daß die Busteilnehmer über Koppelglieder an den Busleiter angeschlossen sind, ist es eine Erkenntnis des Erfinders, daß die Wirkung der Koppelglieder ein wesentlicher Faktor für die Veränderung des Wechselsignals ist.

Die Lösung der Aufgabe wird mit den Merkmalen des Anspruchs 1 erzielt. Auf diese Weise bleibt der Signalverlauf, insbesondere die Flanken und die Dachschräge, der Wechselspannung nahezu erhalten, wodurch die Signalerkennung verbessert ist. Eine bevorzugte Ausgestaltung der Erfindung ist nach Anspruch 3 gegeben. Diese Ausbildung ist dann günstig, wenn die den Signalverlauf verändernden Einflüsse induktiver Art sind. Die Schaltungsanordnung kann bei beliebigen Teilnehmern eines Datenbussystems angewendet werden.

Die Anwendung der Erfindung ist besonders dann vorteilhaft, wenn der erste Impulsteil des Wechselsignals aktiv, insbesondere als Anstiegsimpuls, von einem Sender gebildet wird, und der zweite Impulsteil, z.B. der Abfallimpuls, von den Busteilnehmern als Rückschlagimpuls gebildet wird. Eine spezielle Ausführung der Erfindung ist gemäß Anspruch 5 gegeben. Diese ist in Ihrem Aufbau besonders einfach und umfaßt nur wenige Bauteile.

Ausführungsbeispiele der Erfindung werden nachstehend anhand der Zeichnung näher erläutert. Es zeigen:
- FIG 1: eine Schaltungsanordnung,
- FIG 2: eine Schaltungsanordnung mit einem kapazitiven Element,
- FIG 3: eine weitere Schaltungsanordnung gemäß FIG 2,
- FIG 4: eine Ausgestaltung der Schaltungsanordnung nach FIG 3, und
- FIG 5: eine Ausgestaltung der Schaltungsanordnung nach FIG 4.

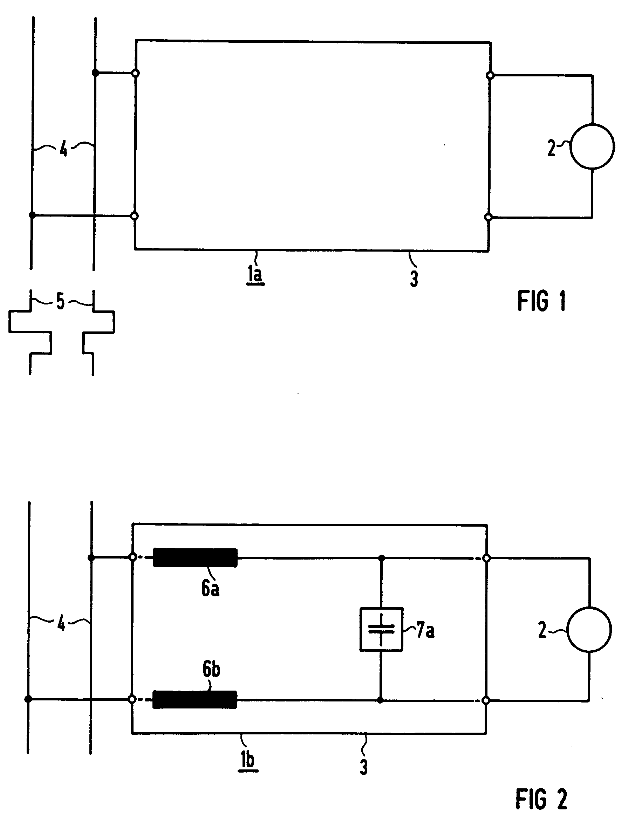

Die in FIG 1 und 2 gezeigten Prinzipdarstellungen sind nicht erfindungswesentlich, dienen jedoch zur Veranschaulichung der prinzipiellen Arbeitsweise der vorliegenden Schaltungsanordnung.

FIG 1 zeigt eine Schaltungsanordnung 1a, bei der eine Signalquelle 2 für ein erstes elektrisches Signal über eine Einrichtung 3 am Busleiter 4 angekoppelt ist. Die Busleiter 4 führen dabei ein zweites, als Wechselsignal ausgebildetes elektrisches Signal 5. Das zweite Signal 5 ist dabei vorzugsweise als Rechtecksignal ausgebildet. Durch auf die Busleiter 4 aufgeschaltete Teilnehmer, insbesondere auch durch die Ankopplung der Signalquelle 2, kommt es zu Einflüsse beim zweiten Signal 5, die den Signalverlauf, insbesondere das Dach und die Flanken, verändern. Die Einrichtung 3 ist dabei derart ausgebildet, daß die den Signalverlauf verändernden Einflüsse kompensiert werden. Die Einrichtung 3 umfaßt dazu Elemente die den Einflüssen entgegenwirken.

Das zweite Signal 5 ist in den folgenden Figuren 2 bis 5 nicht weiter dargestellt. Es gilt sinngemäß wie in FIG 1.

FIG 2 zeigt eine Schaltungsanordnung 1b, bei der die Signalquelle 2 über Drosseln 6a, 6b auf die Busleiter 4 geschaltet ist. Die Drosseln 6a, 6b sind Bestandteil der Einrichtung 3. Da der verändernde Einfuß auf das zweite Signal 5 im wesentlichen induktiver Herkunft ist, weist die Einrichtung 3 ein kapazitiv wirkendes Element 7a auf. Dieses kompensiert den induktiven Einfluß der Drosseln 6a, 6b auf das zweite Signal 5. Diese Maßnahme betrifft im Signalverlauf insbesondere das Dach bzw. die Dachschräge des ersten Impulsteils.

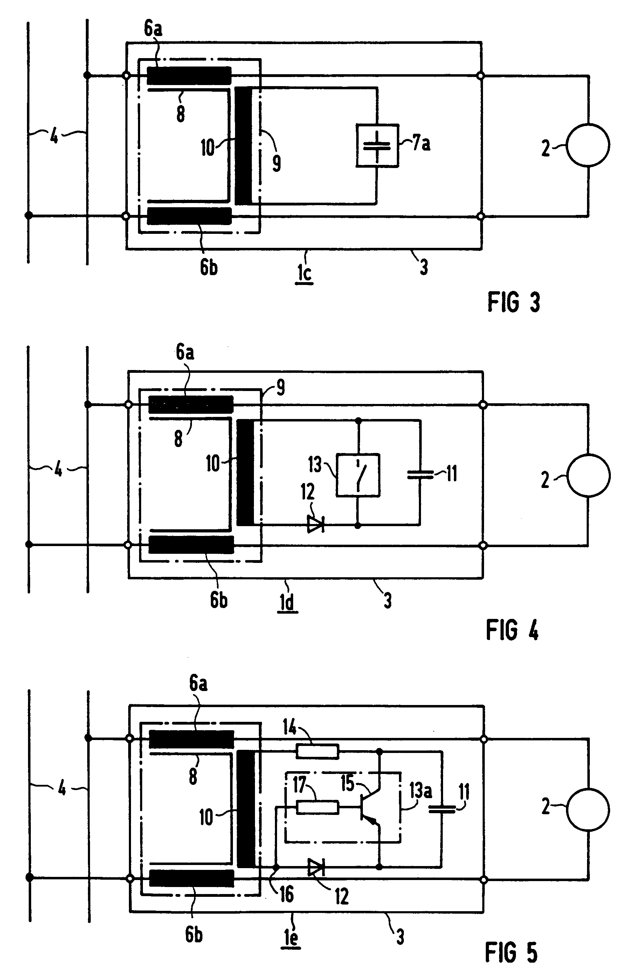

FIG 3 zeigt eine weitere Ausgestaltung der Schaltungsanordnung nach FIG 2. Bei dieser Schaltungsanordnung 1c weisen die Drosseln 6a, 6b einen gemeinsamen Kern 8 auf. Die Ankopplung der Spannungsquelle 2 ist also wie in FIG 2 induktiv, wobei die induktive Ankopplung, insbesondere die Drossel 6a, 6b, Windungen eines induktiven Wandlers 9 sind. Über seine andere Wicklung 10 ist das kapazitive Element 7a angekoppelt. Auf diese Weise ist die Kompensation galvanisch von den Busleitern 4 getrennt und voll symmetrisch.

FIG 4 zeigt eine Schaltungsanordnung 1d nach FIG 3, bei der das kapazitive Element weiter ausgestaltet ist. Dabei bildet die Wicklung 10 zumindest mit einem Kondensator 11 und einer Diode 12 eine Ladereihenschaltung, wobei parallel zum Kondensator 11 ein Entladekreis 13 geschaltet ist. Auf diese Weise ist es möglich, daß die Kompensation durch den Kondensator 11 zu vorgegebenen Zeiten, insbesondere während des Anstiegsimpulses des zweiten Signals 5, erfolgt und, insbesondere während des Abfallimpulses bzw. Rückschlagimpulses, seine Entladung gewährleistet ist. Im Strompfad der Wicklung 10 kann auch gemäß FIG 5 (Widerstand 14) wahlweise ein Zusatzwiderstand angeordnet sein, welcher auch von der Wicklung 10 gebildet sein kann.

FIG 5 zeigt dazu eine weitere Ausgestaltung. Die andere Wicklung 10 des Wandlers 9 bildet dabei wie in FIG 4 mit dem Kondensator 11 und der Diode 12 eine Ladereihenschaltung zur Kompensation von induktiven Einflüssen auf das zweite Signal 5. Dabei kann wahlweise in die Ladereihenschaltung ein Vorwiderstand 14 geschaltet sein. Der Entladekreis 13a enthält einen steuerbaren Halbleiter, der vorliegend als Transistor 15 ausgebildet ist. Die Emitter-Kollektor-Strecke des Transistors 15 ist dem Kondensator 11 parallel geschaltet. Die als Steuereingang dienende Basis des Transistors 15 erhält im Sinne einer Entladungssteuerung für den Kondensator 11 über einen Abgriff 16 der Ladereihenschaltung ein Steuersignal. Zusätzlich kann auch ein Widerstand 17 zwischen den Abgriff 16 und der Basis des Transistors 15 geschaltet sein.

Der beispielhaft dargestellte Halbleiter, nämlich der (PNP-) Transistor 15, ist beliebig durch einen äquivalent wirkenden Halbleiter, insbesondere durch einen NPN-Transistor, einen Feldeffekttransistor oder ein steuerbares Halbleiterventil, austauschbar.

Die Signalquelle 2 in den FIG 1 bis 5 ist bevorzugt als Gleichspannungsquelle ausgebildet, wobei das zweite Signal 5 im wesentlichen ein Rechteck-Wechselsignal ist. Da die Signalquelle 2 zweckmäßigerweise als Stromversorgung für die Busteilnehmer dient, kann das zweite Signal 5 in Abhänigkeit vom ersten Signal erzeugt sein.

Die Ausgestaltungen der Einrichtung 3 in Figuren 1 bis 5 gilt natürlich sinngemäß auch für kapazitive Einflüsse auf das Bussignal, die durch eine Kompensation mit einem induktiv wirkenden Elementen kompensiert werden. Die Schaltungsanordnung ist bevorzugt anwendbar bei der Ankopplung einer Signalquelle auf einen Wechselsignal-Bus.

## Patentansprüche

1. Schaltungsanordnung (1a bis 1e) zur Ankopplung eines ersten elektrischen Signals an ein Datenbussystem, welches zumindest ein zweites als Wechselsignal ausgebildetes elektrisches Signal (5) führt, wobei die Ankopplung induktiv erfolgt, dadurch gekennzeichnet,
daß eine Einrichtung (3) zur Kompensation von Einflüssen der Ankopplung auf den Signalverlauf des zweiten Signals (5), insbesondere auf die "Dachschräge" des zweiten Signals (5), vorgesehen ist,
daß die Einrichtung (3) zur Kompensation ein kapazitiv wirkendes Element (7a,11) umfaßt und
daß die Einrichtung (3) an der Induktivität (6a, 6b) der Ankopplung angekoppelt ist.

2. Schaltungsanordnung nach Anspruch 1, wobei das kapazitive Element (7a,11) in einem ersten Impulsteil des zweiten Signals (5), insbesondere im Anstiegsimpuls, kompensierend wirkt und in einem zweiten Impulsteil, insbesondere im Abfall- oder Rückschlagimpuls, wirkungslos für das zweite Signal (5) ist.

3. Schaltungsanordnung nach Anspruch 2, wobei das kapazitive Element (7a,11) während des ersten Impulsteils aufgeladen und während des zweiten Impulsteil entladen wird.

4. Schaltungsanordnung nach einem der Ansprüche 1 bis 3, wobei die Induktivität (6a,6b) der Ankopplung die eine Wicklung eines induktiven Wandlers (9) ist, über dessen andere Wicklung (10) das kapazitive Element (7a,11) angekoppelt ist.

5. Schaltungsanordnung nach Anspruch 4, wobei die andere Wicklung (10) zumindest mit einem Kondensator (11) und einer Diode (12) eine Ladereihenschaltung bildet und parallel zum Kondensator (11) ein Entladekreis (13,13a) geschaltet ist.

6. Schaltungsanordnung nach Anspruch 5, wobei der Entladekreis (13,13a) einen steuerbaren Halbleiter, insbesondere einen Transistor (15) umfaßt, dessen steuerbare Strecke dem Kondensator (11) parallel geschaltet ist, und dessen Steuereingang im Sinne einer Entladungssteuerung für den Kondensator (11) über einen Abgriff (16) ein Steuersignal erhält.

7. Schaltungsanordnung nach Anspruch 6, wobei die Ladereihenschaltung einen Vorwiderstand aufweist und die Diode (12) derart gepolt ist, daß eine Aufladung des Kondensators (11) während des ersten Impulsteils des zweiten Signals (5) erzielt wird, und wobei der Steuereingang des Halbleiters über einen Widerstand an dem Abgriff (14) der Ladereihenschaltung geführt ist.

8. Schaltungsanordnung nach einem der Ansprüche 1 bis 7, wobei das erste Signal eine Gleichspannung ist.

9. Schaltungsanordnung nach einem der Ansprüche 1 bis 8, wobei das zweite Signal ein Rechteck-Wechselsignal ist.

10. Schaltungsanordnung nach einem der Ansprüche 1 bis 9, wobei das zweite Signal (5) in Abhängigkeit vom ersten Signal erzeugt wird.

11. Schaltungsanordnung nach einem der Ansprüche 1 bis 10, wobei die Ankopplung auf einen Wechselsignal-Bus erfolgt.

## Claims

1. Circuit arrangement (1a to 1e) for coupling a first electrical signal to a data bus system, which carries at least a second electrical signal (5) formed as alternating signal, whereby the coupling takes place inductively, characterized in that
- a device (3) is provided for the compensation of influences of the coupling on the signal pattern of the second signal (5), in particular on the "pulse tilt" of the second signal (5),
- the device (3) for compensation comprises a capacitively acting element (7a, 11) and
- the device (3) is coupled to the inductance (6a, 6b) of the coupling.

2. Circuit arrangement according to claim 1, whereby the capacitive element (7a, 11) acts in a compensating manner in a first pulse part of the second signal (5), in particular in the rise pulse and is ineffective for the second signal (5) in a second pulse part, in particular in the falling or stop pulse.

3. Circuit arrangement according to claim 2, whereby the capacitive element (7a, 11) is charged during the first pulse part and is discharged during the second pulse part.

4. Circuit arrangement according to one of claims 1 to 3, whereby the inductance (6a, 6b) of the coupling is the one winding of an inductive transformer (9), by way of the other winding (10) of which the capacitive element (7a, 11) is coupled.

5. Circuit arrangement according to claim 4, whereby the other winding (10) forms at least with a capacitor (11) and a diode (12) a load series circuit, and a discharge circuit (13, 13a) is connected in parallel with the capacitor (11).

6. Circuit arrangement according to claim 5, whereby the discharge circuit (13, 13a) comprises a controllable semiconductor, in particular a transistor (15), the controllable path of which is connected in parallel with the capacitor (11), and the control input of which receives a control signal in the sense of a discharge control for the capacitor (11) by way of a tap (16).

7. Circuit arrangement according to claim 6, whereby the load series circuit has a series resistance and the diode (12) is polarized in such a way that a charging of the capacitor (11) during the first pulse part of the second signal (5) is attained, and whereby the control input of the semiconductor is carried by way of a resistance at the tap (14) of the load series circuit.

8. Circuit arrangement according to one of claims 1 to 7, whereby the first signal is a direct voltage.

9. Circuit arrangement according to one of claims 1 to 8, whereby the second signal is a rectangular alternating signal.

10. Circuit arrangement according to one of claims 1 to 9, whereby the second signal (5) is generated in dependence upon the first signal.

11. Circuit arrangement according to one of claims 1 to 10, whereby the coupling takes place on to an alternating-signal bus.

## Revendications

1. Montage (1a à 1e) pour coupler un premier signal électrique à un système formant bus de transmission de données, qui véhicule au moins un second signal électrique (5) réalisé sous la forme d'un signal alternatif, le couplage s'effectuant de façon inductive, caractérisé par le fait
qu'il est prévu un dispositif (3) pour compenser des influences du couplage sur l'allure du second signal (5), notamment sur le "versant" du second signal (5),
que le dispositif de compensation (3) comprend un élément à action capacitive (7a,11), et
que le dispositif (3) est accouplé à l'inductance (6a,6b) du couplage.

2. Montage suivant la revendication 1, dans lequel l'élément capacitif (7a,11) a un effet compensatoire dans une première partie impulsionnelle du second signal (5), notamment dans l'impulsion de montée, et est sans action pour le second signal (5) dans une seconde partie impulsionnelle, notamment une impulsion de descente ou de retombée.

3. Montage suivant la revendication 2, dans lequel l'élément capacitif (7a,11) se charge pendant la première partie impulsionnelle et se décharge pendant la seconde partie impulsionnelle.

4. Montage suivant l'une des revendications 1 à 3, dans lequel l'inductance (6a,6b) du couplage est un enroulement d'un transformateur inductif (9), au moyen de l'autre enroulement (10) duquel l'élément capacitif (7a,11) est accouplé.

5. Montage suivant la revendication 4, dans lequel l'autre enroulement (10) forme, au moins avec un condensateur (11) et une diode (12), un circuit série de charge et qu'un circuit de décharge (13,13a) est branché en parallèle avec le condensateur (11).

6. Montage suivant la revendication 5, dans lequel le circuit de décharge (13,13a) comprend un semiconducteur commandable, notamment un transistor (15) , dont la section commandable est branchée en parallèle avec le condensateur (11) et dont l'entrée de commande reçoit un signal de commande, dans le sens d'une commande de décharge pour le condensateur (11), par l'intermédiaire d'une prise (16).

7. Montage suivant la revendication 6, dans lequel le circuit série de charge comporte une résistance additionnelle, et la diode (12) est polarisée de telle sorte qu'une charge du condensateur (11) est obtenue pendant une première partie impulsionnelle du second signal (5), l'entrée de commande du semiconducteur étant reliée par l'intermédiaire d'une résistance à la prise (14) du circuit série de charge.

8. Montage suivant l'une des revendications 1 à 7, dans lequel le premier signal est une tension continue.

9. Montage suivant l'une des revendications 1 à 8, dans lequel le second signal est un signal alternatif rectangulaire.

10. Montage suivant l'une des revendications 1 à 9, dans lequel le second signal (5) est produit en fonction du premier signal.

11. Montage suivant l'une des revendications 1 à 10, dans lequel le couplage est réalisé à un bus de transmission de signaux alternatifs.
